Europäisches Patentamt

(19) European Patent Office

Office européen des brevets

(11) Veröffentlichungsnummer: **0 061 557**
**B1**

(12) EUROPÄISCHE PATENTSCHRIFT

(45) Veröffentlichungstag der Patentschrift:
16.01.85

(51) Int. Cl.⁴: **B 21 C 47/24,** B 65 G 47/74

(21) Anmeldenummer: 81890175.3

(22) Anmeldetag: 22.10.81

(54) Förderanlage für Blechbunde.

(30) Priorität: 23.03.81 AT 1342/81

(43) Veröffentlichungstag der Anmeldung:
06.10.82 Patentblatt 82/40

(45) Bekanntmachung des Hinweises auf die Patenterteilung:
16.01.85 Patentblatt 85/3

(84) Benannte Vertragsstaaten:
BE CH DE FR GB IT LI LU NL SE

(56) Entgegenhaltungen:
US - A - 3 221 668

(73) Patentinhaber: **VOEST-ALPINE Aktiengesellschaft,
Werksgelände, A-4010 Linz (AT)**

(72) Erfinder: **Palmannshofer, Karl, Pammingerstrasse 8,
A-3108 St. Pölten (AT)**

(74) Vertreter: **Hübscher, Gerhard, Dipl.-Ing. et al,
Patentanwälte Dipl.-Ing. Gerhard Hübscher Dipl.-Ing.
Helmut Hübscher Dipl.-Ing. Heiner Hübscher
Spittelwiese 7, A-4020 Linz (AT)**

## Beschreibung

Die Erfindung bezieht sich auf eine Förderanlage für Blechbunde mit einem entlang der Förderstrecke mit Hilfe eines Antriebes verfahrbaren Bundwagen, wobei entlang der Förderstrecke zur Lagenerfassung des Bundwagens dienende Vorrichtungen angeordnet sind.

Bei bekannten Förderanlagen dieser Art müssen die auf Ablagen bereitgestellten Blechbunde vom Bundwagen mit Hilfe eines Hubtisches übernommen und zu Verarbeitungsstationen gefördert werden, was wegen der notwendigen Ausrichtung der Blechbunde gegenüber dem Hubwagen bzw. gegenüber den Bearbeitungsstationen ein genaues Anfahren vorbestimmter Positionen erforderlich macht. Das Einhalten geringer Toleranzen setzt eine Lagenerfassung der Bundwagen auf den Förderstrecken voraus. Um dabei von den Ungenauigkeiten des Antriebes der Bundwagen unabhängig zu werden, ist es bekannt, entsprechende Endschalter für den Bundwagenantrieb entlang der Förderstrecke anzuordnen. Auf Grund der vergleichsweise grossen Anzahl der benötigten Endschalter ist deren Verkabelung nicht nur aufwendig, sondern auch durch den rauhen Walzwerksbetrieb gefährdet, wozu noch kommt, dass eine Änderung des Förderablaufes eine Neuverteilung der Endschalter mit den hiefür aufzubringenden Montagearbeiten bedingt. Die Lagenerfassung eines Bundwagens über seinen Antrieb kommt wegen der Ungenauigkeit der üblichen Bundwagenantriebe nicht in Frage. Bei Bundwagen mit angetriebenen Laufrädern ist nämlich ein Schlupf zwischen den angetriebenen Laufrädern und den Laufschienen nicht zu vermeiden. Erfolgt der Bundwagenantrieb über eine sich über die Förderstrecke erstreckende, umlaufende Förderkette, so kann zwar ein Schlupf verhindert werden, doch bedingt der Kettendurchhang eine unerwünschte Ungenauigkeit.

Der Erfindung liegt somit die Aufgabe zugrunde, diese Mängel zu vermeiden und eine Förderanlage für Blechbunde der eingangs geschilderten Art so zu verbessern, dass mit einfachen konstruktiven Mitteln nicht nur ein genauer Antrieb für den Bundwagen, sondern auch eine exakte Lagenerfassung des Bundwagens auf der Förderstrecke gewährleistet ist.

Die Erfindung löst die gestellte Aufgabe dadurch, dass der Bundwagenantrieb aus einer entlang der Förderstrecke verlegten, mit einem antreibbaren Zahnrad des Bundwagens kämmenden Zahnstange besteht, und dass die Zahnstange als Inkrementalmassstab für eine Längenmesseinrichtung dient, die eine Abtasteinheit für den Inkrementalmassstab und wenigstens einen Zähler für die Abtastimpulse der Abtasteinheit umfasst.

Bei Laufkränen ist es zwar bereits bekannt (US-PS Nr. 3221668), entlang der Fahrstrecke eine Zahnstange zu verlegen, in die ein antreibbares Zahnrad am Fahrgestell des Kranes eingreift, was einen schlupffreien Fahrantrieb gewährleistet, doch kann mit diesem bekannten Fahrantrieb keineswegs eine genaue Lagenerfassung sichergestellt werden.

Dies wird nach der Erfindung erst mit Hilfe der mit der Zahnstange zusammenwirkenden Längenmesseinrichtung möglich. Die am Bundwagen vorgesehene Abtasteinheit erzeugt nämlich beim Überfahren jedes Zahnes bzw. jeder Zahnlücke der Zahnstange einen Abtastimpuls, so dass die im Zähler gezählten Abtastimpulse der Abtasteinheit auf Grund des vorgegebenen Abstandes der Zähne bzw. Zahnlücken voneinander die vom Bundwagen auf der Förderstrecke zurückgelegte Weglänge bestimmen. Dies bedeutet, dass über den Zählerstand nicht nur jede gewünschte Position genau angefahren werden kann, sondern auch, dass am Zählerstand die jeweilige Augenblickslage des Bundwagens abzulesen ist. Mit Hilfe des erfindungsgemässen Antriebes können somit im Zusammenwirken mit der erfindungsgemässen Längenmesseinrichtung alle Anforderungen an die Genauigkeit des Bundwagenantriebes und an die Lagenerfassung des Bundwagens erfüllt werden.

Die Ausbildung der Abtasteinheit spielt eine untergeordnete Rolle. Abtasteinheiten, die induktiv oder kapazitiv auf die Zahnstange ansprechen, sind in gleicher Weise einsetzbar, wie optische Abtasteinheiten mit einer Lichtschranke im Bereich der Zähne der Zahnstange.

Um am Zählerstand die Fahrstrecke des Bundwagens ablesen zu können, ohne Rechenarbeiten durchführen zu müssen, soll die Zahnstange wenigstens eine Bezugsmarke für einen den Zähler auf einen vorbestimmten Bezugswert stellenden Setzimpuls aufweisen. Beim Überfahren dieser Bezugsmarke wird über die Abtasteinheit, die hiefür einen gesonderten Abtastkopf besitzen kann, an den Zähler ein Setzimpuls angelegt, der den Zähler entweder auf Null oder auf einen vorgegebenen, gespeicherten Wert setzt. Damit ist der Anfang der Längenmessung festgelegt, wobei auch eine Fehlerkorrektur möglich wird, weil bei der Bezugsmarke der Zähler auf den Bezugswert gesetzt wird, wenn ein Impuls einmal nicht gezählt wurde.

In weiterer Ausbildung der Erfindung kann der Längenmesseinrichtung ein ortsfester, vom Blechbund auf dem Bundwagen betätigbarer Schalter zur Bestimmung der Bundhöhe zugeordnet sein. Über diesen Schalter kann der jeweilige Zählerstand in einem Speicher abgespeichert werden, so dass über die Differenz der beiden Zählerstände die Bundhöhe bestimmt ist. Eine andere Möglichkeit besteht darin, dass die Längenmesseinrichtung einen am Bundwagen angeordneten, beim Unterfahren eines Blechbundes von dem Blechbund betätigbaren Schalter zur Bestimmung der Bundhöhe umfasst. Die Differenz des Zählerstandes bei der Schalterbetätigung am Ende des Blechbundes und des Zählerstandes bei der Schalterbetätigung am Bundanfang ergibt wiederum die Bundhöhe. Da die Länge des Bundwagens konstruktiv vorgegeben ist, kann mit Hilfe der Messung mit dem am Bundwagen vorgesehenen Schalter der Blechbund mittig auf den Bundwagen abgelegt werden. Der Bundwagen braucht hiefür ja nur entsprechend verschoben zu werden. In gleicher Weise dient der ortsfeste Schalter zur mittigen Ablage der Blechbunde in vorgegebenen Arbeitsstationen.

Die Betätigung der Schalter über die mit Hilfe des Bundwagens angeförderten Blechbunde, wobei die Stirnseiten der Blechbunde in ihrer Lage zu den Schaltern ausschlaggebend sind, bildet eine vorteilhafte Voraussetzung für die Ausbildung der Schalter als Lichtschranken, deren Lichtstrahl durch den Blechbund unterbrochen wird.

Schliesslich können die vorgesehenen Schalter einen an die Abtasteinheit angeschlossenen, zusätzlichen Zähler starten und stoppen, was den Vorteil mit sich bringt, dass an diesen Zählern die Bundhöhe unmittelbar abzulesen ist.

In der Zeichnung ist der Erfindungsgegenstand in einem Ausführungsbeispiel vereinfacht dargestellt. Es zeigen:

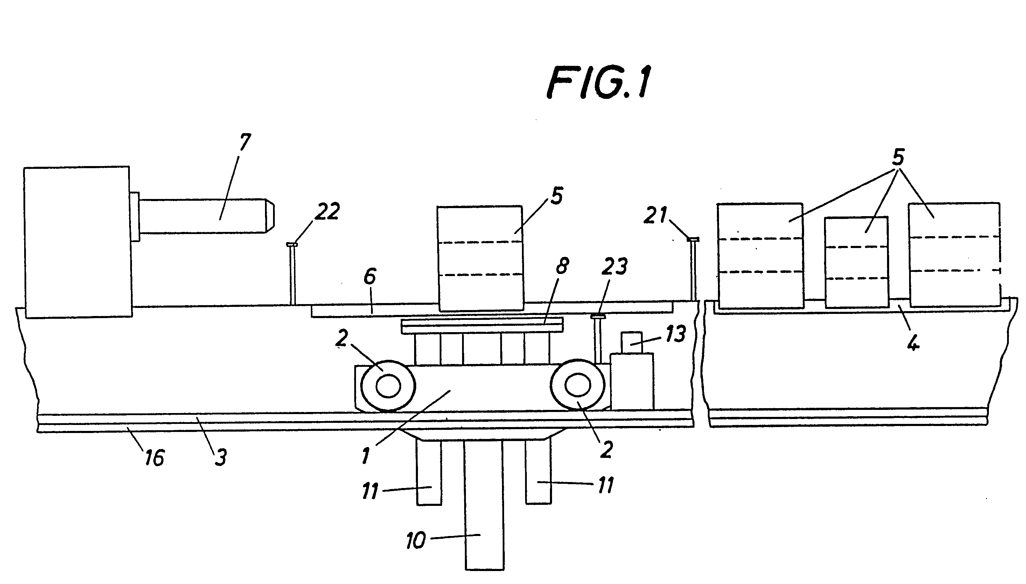

Fig. 1 eine erfindungsgemässe Förderanlage für Blechbunde in einer vereinfachten Seitenansicht;

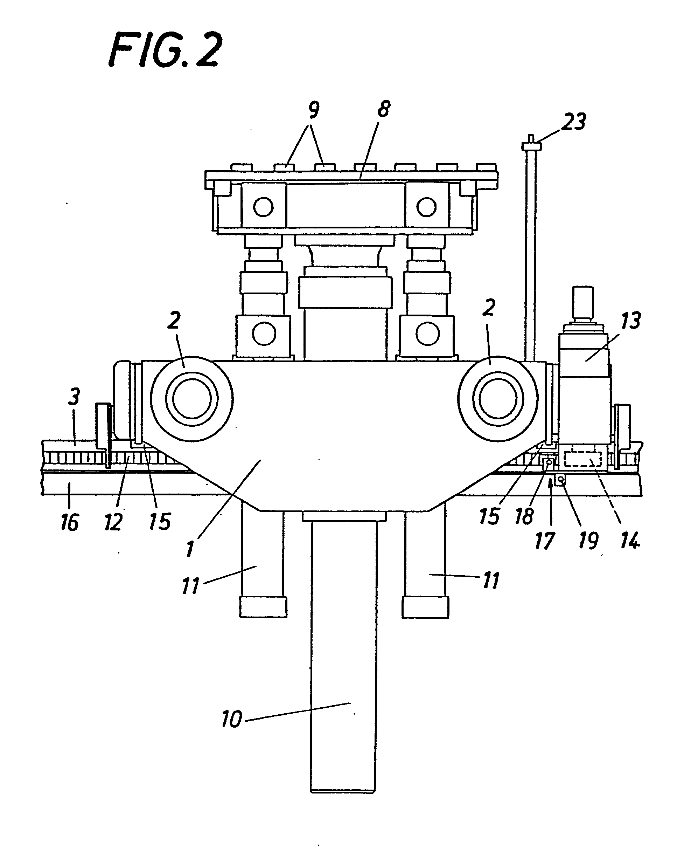

Fig. 2 eine Seitenansicht des Bundwagens;

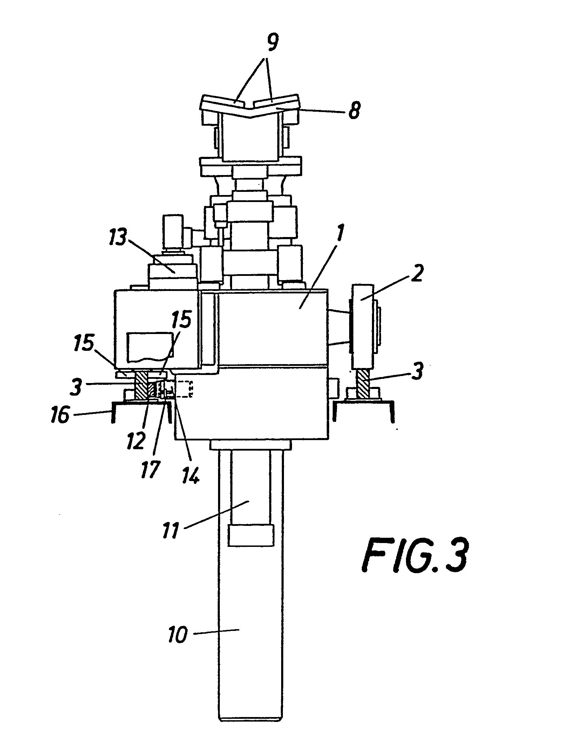

Fig. 3 eine Stirnansicht des Bundwagens;

Fig. 4 den Bundwagen in Draufsicht, und

Fig. 5 die mit der Zahnstange zusammenwirkende Abtasteinheit der Längenmesseinrichtung in einem grösseren Massstab.

Die dargestellte Förderanlage besteht im wesentlichen aus einem Bundwagen 1, der auf Laufrollen 2 entlang von zwei Laufschienen 3 verfahren werden kann. Die so gebildete Förderstrecke reicht von einer Auflage 4 für die Blechbunde 5 über eine Zwischenauflage 6 zu einem Haspel 7, auf dessen Dorn die Blechbunde aufgesteckt werden müssen. Zu diesem Zweck weist der Bundwagen 1 einen Hubtisch 8 mit einer Bundauflage 9 auf, der mittels einer Führungssäule 10 vertikal verschiebbar im Bundwagen 1 gelagert ist und mit Hilfe von zwei Zylindern 11 gehoben und gesenkt werden kann.

Zum Antrieb des Bundwagens 1 ist eine Zahnstange 12 entlang der Förderstrecke verlegt, die mit einem über einen Motor 13 antreibbaren Zahnrad 14 kämmt. Das Zahnrad 14, das eine vertikale Drehachse aufweist, ist mit dem Motor 13 zu einer an den Bundwagen 1 anbaubaren Baueinheit zusammengefasst, so dass auch bestehende Bundwagen mit einem solchen Antrieb ausgerüstet werden können. Auf Grund der gewählten vertikalen Wälzfläche des Zahnstangenantriebes ergibt sich der Vorteil, dass Abnützungen der Laufschienen keinen Einfluss auf den Zahneingriff haben können.

Da dieser Zahnstangenantrieb keine Seitenführung für den Bundwagen ergeben kann, ist eine der Laufschienen 3 als Führungsschiene für zwei Führungsrollenpaare 15 des Bundwagens 1 ausgebildet. Durch die Abstützung dieser Führungsrollen 15 an zwei einander gegenüberliegenden, vertikalen Führungsflächen der Laufschiene 3 wird eine genaue Seitenführung für den Bundwagen 1 sichergestellt, die ebenfalls vom Verschleiss der Schienenlauffläche unabhängig ist. Die Laufrollen 2 sind demnach auch von Aufgaben der Seitenführung frei und brauchen keine Spurkränze aufzuweisen, was die Konstruktion der Laufräder stark vereinfacht.

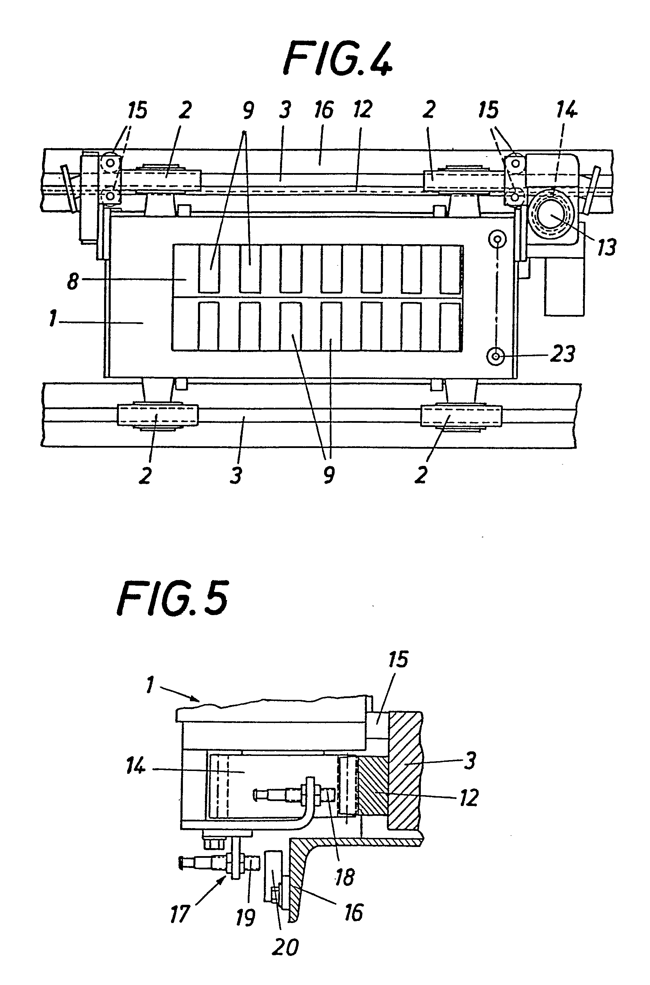

Die Zahnstange 12, die vorzugsweise der mit den Führungsrollen 15 zusammenwirkenden Laufschiene 3 zugeordnet und mit dieser auf einem Träger 16 befestigt ist, dient aber nicht nur zum Antrieb des Bundwagens 1, sondern auch zu dessen Lagenerfassung auf der Förderstrecke. Zu diesem Zweck dient die Zahnstange 12 als Inkrementalmassstab einer Längenmesseinrichtung, die neben dem Inkrementalmassstab eine am Bundwagen 1 vorgesehene Abtasteinheit 17 mit zwei Abtastköpfen 18 und 19 umfasst, die an einen nicht dargestellten Zähler angeschlossen sind. Der mit der Zahnstange 12 zusammenwirkende Abtastkopf 18 erzeugt beim Überfahren jedes Zahnes bzw. jeder Zahnlücke der Zahnstange 12 einen Impuls, der vom Zähler gezählt wird. Bei dem vorgegebenen Abstand der Zähne und Zahnlücken voneinander stellt somit die Anzahl der gezählten Abtastimpulse ein Mass für den Verstellweg des Bundwagens 1 dar. Mit dem zweiten Abtastkopf 19 wird beim Überfahren einer an der Zahnstange 12 oder am Träger 16 vorgesehenen Bezugsmarke 20 (Fig. 5) ein Setzimpuls für den Zähler erzeugt, der beim Auftreten dieses Setzimpulses entweder auf Null gestellt wird oder einen beispielsweise in einem Speicher abgespeicherten Bezugswert als Zählstand übernimmt. Beim Überfahren der Bezugsmarke 20 wird folglich der Zählbeginn und damit der Anfang der Förderstrecke eindeutig festgelegt, so dass der Zählerstand tatsächlich die jeweilige Lage des Bundwagens 1 angibt. Der Bundwagen 1 kann daher auch vorgegebene Sollagen auf Grund dieser Lagenerfassung ausreichend genau anfahren.

Die geschilderte Längenmesseinrichtung kann darüber hinaus zur Bestimmung der Bundhöhe und der mittigen Ablage der Bunde auf dem Bundwagen bzw. auf der Zwischenauflage 6 herangezogen werden. Ist ein ortsfester Schalter 21, beispielsweise eine quer zur Förderrichtung verlaufende Lichtschranke, vorgesehen, so kann beim Vorbeibewegen eines Bundes jeweils ein Schaltimpuls gewonnen werden, wenn die vordere und hintere Stirnfläche der Bunde am Schalter 21 vorbeibewegt werden. Die Anzahl der zwischen den beiden Schaltimpulsen gezählten Abtastimpulse der Zahnstange 12 gibt daher die Höhe des jeweiligen Blechbundes 5 an. Mit einem gesonderten Zähler, der über den Schalter 21 gestartet und gestoppt wird, wird eine unmittelbare Erfassung der Bundhöhe möglich.

Mittels der ermittelten Bundhöhe wird auch das mittige Ablegen der Blechbunde 5 auf der Zwischenauflage 6 in einfacher Weise sichergestellt, weil der Abstand des Schalters 21 von der Auflagenmitte gegeben ist. Der Bundwagen braucht ja lediglich von seiner Lage beim Auftreten des zweiten Schaltimpulses des Schalters 21 um eine Strecke gegen die Zwischenauflage 6 hin verfahren zu werden, welche Strecke dem um die halbe Bundhöhe verminderten Abstand zwischen dem Schalter 21 und der Auflagenmitte entspricht.

Ist dem Haspel 7 ein weiterer ortsfester Schalter 22 vorgeordnet, so kann jede gewünschte Aufschieblänge des Bundes 5 auf den Haspeldorn gewährleistet werden.

Eine andere Möglichkeit der Bundhöhenerfassung besteht darin, dem Bundwagen 1 einen auf die Blechbunde 5 ansprechenden Schalter 23 zuzuordnen, der entsprechende Schaltimpulse beim Unterfahren der auf den Auflagen 4 bzw. 6 ruhenden Bunde 5 erzeugt. Über diesen Schalter 23 ist nicht nur in analoger Weise die Bestimmung der jeweiligen Bundhöhe durchführbar, sondern auch die mittige Ablage des Blechbundes auf dem Hubtisch 8, und zwar unabhängig davon, welche Lage die Blechbunde 5 auf der Auflage 4 (oder 6) einnehmen. Der Schalter 23 gewährleistet demnach im Zusammenwirken mit der zur Lagenerfassung des Bundwagens vorgesehenen Längenmesseinrichtung eine bedeutende Vereinfachung hinsichtlich der Zubringung und der Ablage der Bunde 5, weil eine mittige Ausrichtung der Bunde gegenüber den vorgesehenen Auflagen nicht nötig ist. Es kann somit auch eine gemeinsame Auflage für mehrere Blechbunde vorgesehen werden.

### Patentansprüche

1. Förderanlage für Blechbunde mit einem entlang der Förderstrecke mit Hilfe eines Antriebes verfahrbaren Bundwagen (1), wobei entlang der Förderstrecke zur Lagenerfassung des Bundwagens dienende Vorrichtungen angeordnet sind, dadurch gekennzeichnet, dass der Bundwagenantrieb aus einer entlang der Förderstrecke verlegten, mit einem antreibbaren Zahnrad (14) des Bundwagens (1) kämmenden Zahnstange (12) besteht, und dass die Zahnstange (12) als Inkrementalmassstab für eine Längenmesseinrichtung dient, die eine Abtasteinheit (17) für den Inkrementalmassstab und wenigstens einen Zähler für die Abtastimpulse der Abtasteinheit (17) umfasst.

2. Förderanlage nach Anspruch 1, dadurch gekennzeichnet, dass die Zahnstange (12) wenigstens eine zugeordnete Bezugsmarke (20) für einen den Zähler auf einen vorbestimmten Bezugswert stellenden Setzimpuls aufweist.

3. Förderanlage nach einem der Ansprüche 1 oder 2, dadurch gekennzeichnet, dass der Längenmesseinrichtung ein ortsfester, vom Blechbund (5) auf dem Bundwagen (1) betätigbarer Schalter (21, 22) zur Bestimmung der Bundhöhe zugeordnet ist.

4. Förderanlage nach einem der Ansprüche 1 bis 3, dadurch gekennzeichnet, dass die Längenmesseinrichtung einen am Bundwagen (1) angeordneten, beim Unterfahren eines Blechbundes (5) von dem Blechbund (5) betätigbaren Schalter (23) zur Bestimmung der Bundhöhe umfasst.

5. Förderanlage nach einem der Ansprüche 3 oder 4, dadurch gekennzeichnet, dass der Schalter (21 bis 23) als Lichtschranke ausgebildet ist.

6. Förderanlage nach einem der Ansprüche 3 bis 5, dadurch gekennzeichnet, dass der Schalter (21 bis 23) einen an die Abtasteinheit (17) angeschlossenen Zähler startet und stoppt.

### Claims

1. A plant for conveying sheet metal coils comprising a coil car, which is movable by means of a drive along the path of travel, characterized in that the drive for the coil car consists of a rack (12), which extends along the path of travel and is in mesh with a drivable gear (14) of the coil car (1), and that the rack (12) consists of an incremental scale for a length-measuring device, which comprises a unit (17) for scanning the incremental scale and at least one counter for counting the output pulses of the scanning unit (17).

2. A conveying plant according to Claim 1, characterized in that the rack (12) comprises at least one associated reference mark (20) for a setting pulse for setting the counter to a predetermined reference count.

3. A conveying plant according to Claim 1 or 2, characterized in that a stationary switch (21, 22) for determining the height of the coil is associated with the length-measuring device and is operable by the sheet metal coil (5) on the coil car (1).

4. A conveying plant according to any of Claims 1 to 3, characterized in that the length-measuring device comprises a switch (23) for determining the height of the coil, which switch is mounted on the coil car (1) and is arranged to be actuated by a sheet metal coil (5) as the coil car is moved under the coil.

5. A conveying plant according to Claim 3 or 4, characterized in that the switch (21 to 23) consists of a photoelectric light beam detector.

6. A conveying plant according to any of Claims 3 to 5, characterized in that the switch (21 to 23) starts and stops a counter that is connected to the scanning unit (17).

### Revendications

1. Transporteur pour bobines de tôle comportant un chariot (1) à bobines pouvant rouler le long du parcours de transport à l'aide d'un entraînement, des dispositifs servant à détecter la position du chariot à bobines étant disposés le long du parcours de transport, caractérisé par le fait que l'entraînement du chariot à bobines est formé d'une crémaillère (12) posée le long du parcours de transport et engrenant avec une roue dentée (14) du chariot (1) à bobines, qui peut être entraînée, et que la crémaillère (12) sert de règle incrémentielle à un dispositif de mesure de longueur qui comprend une unité (17) d'exploration de la règle incrémentielle et au moins un compteur pour les impulsions d'exploration de l'unité (17) d'exploration.

2. Transporteur selon la revendication 1, caractérisé par le fait que la crémaillère (12) présente au moins un repère de référence (20) correspondant, pour une impulsion de positionnement qui met le compteur à une valeur de référence prédéterminée.

3. Transporteur selon l'une des revendications 1 ou 2, caractérisé par le fait qu'au dispositif de mesure de longueur est adjoint un interrupteur (21, 22) à position fixe pouvant être actionné par la bobine de tôle (5) placée sur le chariot (1) à bobines pour déterminer la hauteur de ladite bobine.

4. Transporteur selon l'une des revendications 1 à 3, caractérisé par le fait que le dispositif de mesure de longueur comprend un interrupteur (23), disposé sur le chariot (1) à bobines, pouvant être actionné par une bobine de tôle (5) lorsqu'il passe en dessous d'elle, pour déterminer la hauteur de ladite bobine.

5. Transporteur selon l'une des revendications 3 ou 4, caractérisé par le fait que l'interrupteur (21 à 23) est conçu sous forme de barrière photo-électrique.

6. Transporteur selon l'une des revendications 3 à 5, caractérisé par le fait que l'interrupteur (21 à 23) met en marche et arrête un compteur relié à l'unité d'exploration (17).

# FIG.1

# FIG.2

FIG.3

# FIG.4

# FIG.5